(19) Europäisches Patentamt / European Patent Office / Office européen des brevets

(11) **EP 4 708 753 A1**

(12) **EUROPEAN PATENT APPLICATION**
published in accordance with Art. 153(4) EPC

(43) Date of publication:
**11.03.2026 Bulletin 2026/11**

(21) Application number: **24810072.9**

(22) Date of filing: **12.04.2024**

(51) International Patent Classification (IPC):
*H04L 5/00* (2006.01)

(52) Cooperative Patent Classification (CPC):
**H04L 5/00; H04L 43/16; H04W 4/02; H04W 56/00**

(86) International application number:
**PCT/CN2024/087612**

(87) International publication number:
**WO 2024/239825 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.05.2023 CN 202310573566**

(71) Applicant: **Huawei Technologies Co., Ltd.
Shenzhen, Guangdong 518129 (CN)**

(72) Inventors:
- **CHEN, Ying**
  **Shenzhen, Guangdong 518129 (CN)**
- **ZHANG, Jiayin**
  **Shenzhen, Guangdong 518129 (CN)**
- **WANG, Jun**
  **Shenzhen, Guangdong 518129 (CN)**

(74) Representative: **Maiwald GmbH
Elisenhof
Elisenstraße 3
80335 München (DE)**

(54) **COMMUNICATION METHOD AND RELATED APPARATUS**

(57) A communication method and a related apparatus are provided. The method includes: receiving a first timing advance TA adjustment amount from a network device; and determining a first TA value, and sending, based on the first TA value, a $1^{st}$ uplink signal after global navigation satellite system GNSS measurement. When a first condition is met, the first TA value is determined based on a first GNSS measurement value obtained through the GNSS measurement, the first TA adjustment amount, and a first value. When a second condition is met, the first TA value is determined based on the first GNSS measurement value, the first TA adjustment amount, and a second value. The first value is different from the second value. The method in this application can improve accuracy of the determined TA value (that is, the first TA value), thereby improving communication reliability.

FIG. 5

EP 4 708 753 A1

## Description

This application claims priority to Chinese Patent Application No. 202310573566.2, filed with the China National Intellectual Property Administration on May 20, 2023 and entitled "COMMUNICATION METHOD AND RELATED APPARATUS", which is incorporated herein by reference in its entirety.

## TECHNICAL FIELD

This application relates to the field of communication technologies, and in particular, to a communication method and a related apparatus.

## BACKGROUND

In comparison with a terrestrial communication system, a satellite communication system has such advantages as a long communication distance, a large coverage area, and a wide communication frequency band, and can provide communication services for users anytime and anywhere. Therefore, application prospects of the satellite communication system are expanding.

In the terrestrial communication system, because there is a specific distance between a terminal device and a network device (for example, a base station), there is a specific delay when an uplink signal frame sent by the terminal device arrives at the network device. To maintain synchronization between the uplink signal frame of the terminal device and a downlink data frame of the network device, the network device needs to send a timing advance command (timing advance command, TAC) to the terminal device to indicate a timing advance (timing advance, TA) value, and the terminal device sends an uplink signal based on the TA value. The TA value reflects a signal round trip transmission delay between the terminal device and the network device.

However, in the satellite communication system, a satellite serves as a network device. Because a distance between a terminal device and the satellite is very long, a signal round trip transmission delay between the terminal device and the satellite is high, and a manner of sending a TAC by the satellite to the terminal device to indicate a TA value causes a very large error. Based on this, how to improve accuracy of the TA value becomes a problem to be resolved urgently.

## SUMMARY

This application provides a communication method and a related apparatus, to improve accuracy of a TA value, and improve communication reliability.

According to a first aspect, this application provides a communication method. The communication method is performed by a terminal device. The terminal device may be the terminal device, or may be a module or a chip in the terminal device. In the method, the terminal device receives a first TA adjustment amount from a network device. The terminal device determines a first TA value, and sends, based on the first TA value, a 1st uplink signal obtained through GNSS measurement. When a first condition is met, the first TA value is determined based on a first GNSS measurement value obtained through the GNSS measurement, the first TA adjustment amount, and a first value. When a second condition is met, the first TA value is determined based on the first GNSS measurement value, the first TA adjustment amount, and a second value. The first value is different from the second value.

For example, the first value may be a value determined by accumulating all previous TACs, the first value may be a value determined by accumulating a part of previous TACs, or the first value may be a preset value. Optionally, the second value may be 0, the second value may be a value determined by accumulating a part of previous TACs, or the second value may be a preset value.

In this application, when the first condition is met, an error of a GNSS measurement value is corrected based on accumulated TACs (where for example, the first value is the value determined by accumulating all previous TACs), so that accuracy of the determined first TA value can be improved. When the second condition is met, an error of a GNSS measurement value is corrected based on a currently received TA adjustment amount instead of accumulated TACs (where for example, the second value is 0), so that an error jump can be avoided, and accuracy of the first TA value can be improved, thereby improving communication reliability. In other words, because the TAC can be used to correct the error of the GNSS measurement value, if the GNSS measurement value is not updated for a long time, once the GNSS measurement value is updated, a jump of a TA error can be avoided without accumulating previous TACs that are used to continuously correct the GNSS error.

In a possible implementation, that the first condition is met includes:
The terminal device performs the GNSS measurement within first duration or when the first duration ends.

That the second condition is met includes:
The terminal device performs the GNSS measurement after the first duration.

The first duration is GNSS validity duration, or the first duration is determined based on the GNSS validity duration and a first threshold.

Optionally, in a possible implementation, that the first condition is met includes:

The terminal device performs the GNSS measurement within first duration.

That the second condition is met includes:

The terminal device performs the GNSS measurement after the first duration or when the first duration ends.

The first duration is GNSS validity duration, or the first duration is determined based on the GNSS validity duration and a first threshold.

In this implementation, when the first duration is the GNSS validity duration, whether a TAC accumulation rule is used is determined based on the GNSS validity duration. A determining criterion is simple, signaling overheads are small, and a jump of a TA error can be reduced to some extent. When the first duration is determined based on the GNSS validity duration and the first threshold, the first duration may be a sum of the GNSS validity duration and the first threshold. Whether TAC accumulation needs to be performed may be flexibly determined to different degrees, and flexibility is higher.

In a possible implementation, that the first condition is met includes:

A location change amount of the terminal device is less than or equal to a second threshold.

That the second condition is met includes:

The location change amount of the terminal device is greater than the second threshold.

The location change amount of the terminal device is determined based on the first GNSS measurement value and a second GNSS measurement value, and the second GNSS measurement value is a GNSS measurement value determined before the GNSS measurement.

Optionally, in a possible implementation, that the first condition is met includes:

A location change amount of the terminal device is less than a second threshold.

That the second condition is met includes:

The location change amount of the terminal device is greater than or equal to the second threshold.

The location change amount of the terminal device is determined based on the first GNSS measurement value and a second GNSS measurement value, and the second GNSS measurement value is a GNSS measurement value determined before the GNSS measurement.

In this implementation, a TAC accumulation rule is directly determined based on a location change of the terminal device, so that how to perform TA value adjustment can be more accurately determined, and applicability is high.

In a possible implementation, that the first condition is met includes:

A TA value change amount is less than or equal to a third threshold.

That the second condition is met includes:

The TA value change amount is greater than the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

Optionally, in a possible implementation, that the first condition is met includes:

A TA value change amount is less than a third threshold.

That the second condition is met includes:

The TA value change amount is greater than or equal to the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

In this implementation, a TAC accumulation rule may be further determined based on the TA value change amount. There are various implementations, and applicability is high.

In a possible implementation, the location change amount of the terminal device is a first difference between the first GNSS measurement value and the second GNSS measurement value, or the location change amount of the terminal device is a ratio of the first difference to the second GNSS measurement value.

In a possible implementation, the TA value change amount is a second difference between the second TA value and the third TA value, or the TA value change amount is a ratio of the second difference to the third TA value.

In a possible implementation, the first threshold, the second threshold, or the third threshold is indicated by the network device, the first threshold, the second threshold, or the third threshold is predefined in a protocol, or the first threshold, the second threshold, or the third threshold is preconfigured.

In a possible implementation, a threshold is a value corresponding to the GNSS validity duration, different GNSS validity duration corresponds to different values of the threshold, and the threshold is the first threshold, the second threshold, or the third threshold.

In this implementation, a specific value of the first threshold, the second threshold, or the third threshold may be determined based on the GNSS validity duration. Therefore, flexibility is higher, and solution applicability is higher.

According to a second aspect, this application provides a communication method. The communication method is performed by a network device. The network device may be the network device, or may be a module or a chip in the network device. In the method, the network device sends a first TA adjustment amount to a terminal device. The network device receives a 1st uplink signal that is sent by the terminal device based on a first TA value and that is obtained through GNSS measurement. When a first condition is met, the first TA value is determined based on a first GNSS measurement value obtained through the GNSS measurement, the first TA adjustment amount, and a first value. When a second condition is met, the first TA value is determined based on the first GNSS measurement value, the first TA adjustment amount, and a second value. The first value is different from the second value.

In a possible implementation, that the first condition is met includes:

The terminal device performs the GNSS measurement within first duration or when the first duration ends.

That the second condition is met includes:

The terminal device performs the GNSS measurement after the first duration.

The first duration is GNSS validity duration, or the first duration is determined based on the GNSS validity duration and a first threshold.

Optionally, in a possible implementation, that the first condition is met includes:

The terminal device performs the GNSS measurement within first duration.

That the second condition is met includes:

The terminal device performs the GNSS measurement after the first duration or when the first duration ends.

The first duration is GNSS validity duration, or the first duration is determined based on the GNSS validity duration and a first threshold.

In a possible implementation, that the first condition is met includes:

A location change amount of the terminal device is less than or equal to a second threshold.

That the second condition is met includes:

The location change amount of the terminal device is greater than the second threshold.

The location change amount of the terminal device is determined based on the first GNSS measurement value and a second GNSS measurement value, and the second GNSS measurement value is a GNSS measurement value determined before the GNSS measurement.

Optionally, in a possible implementation, that the first condition is met includes:

A location change amount of the terminal device is less than a second threshold.

That the second condition is met includes:

The location change amount of the terminal device is greater than or equal to the second threshold.

The location change amount of the terminal device is determined based on the first GNSS measurement value and a second GNSS measurement value, and the second GNSS measurement value is a GNSS measurement value determined before the GNSS measurement.

In a possible implementation, that the first condition is met includes:

A TA value change amount is less than or equal to a third threshold.

That the second condition is met includes:

The TA value change amount is greater than the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

Optionally, in a possible implementation, that the first condition is met includes:

A TA value change amount is less than a third threshold.

That the second condition is met includes:

The TA value change amount is greater than or equal to the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

In a possible implementation, the location change amount of the terminal device is a first difference between the first GNSS measurement value and the second GNSS measurement value, or the location change amount of the terminal device is a ratio of the first difference to the second GNSS measurement value.

In a possible implementation, the TA value change amount is a second difference between the second TA value and the third TA value, or the TA value change amount is a ratio of the second difference to the third TA value.

In a possible implementation, the first threshold, the second threshold, or the third threshold is indicated by the network device, the first threshold, the second threshold, or the third threshold is predefined in a protocol, or the first threshold, the second threshold, or the third threshold is preconfigured.

In a possible implementation, a threshold is a value corresponding to the GNSS validity duration, different GNSS validity duration corresponds to different values of the threshold, and the threshold is the first threshold, the second threshold, or the third threshold.

According to a third aspect, this application provides a communication apparatus. The communication apparatus may be the communication apparatus, or a module, a chip, or a unit in the communication apparatus. For example, the communication apparatus may be a terminal device. The communication apparatus includes:

a transceiver unit, configured to receive a first TA adjustment amount from a network device; and
a processing unit, configured to determine a first TA value.

The transceiver unit is configured to send, based on the first TA value, a $1^{st}$ uplink signal obtained through GNSS measurement.

When a first condition is met, the first TA value is determined based on a first GNSS measurement value obtained through the GNSS measurement, the first TA adjustment amount, and a first value.

When a second condition is met, the first TA value is determined based on the first GNSS measurement value, the first TA adjustment amount, and a second value. The first value is different from the second value.

In a possible implementation, that the first condition is met includes:

The terminal device performs the GNSS measurement within first duration or when the first duration ends.

That the second condition is met includes:

The terminal device performs the GNSS measurement after the first duration.

The first duration is GNSS validity duration, or the first duration is determined based on the GNSS validity duration and a first threshold.

Optionally, in a possible implementation, that the first condition is met includes:

The terminal device performs the GNSS measurement within first duration.

That the second condition is met includes:

The terminal device performs the GNSS measurement after the first duration or when the first duration ends.

The first duration is GNSS validity duration, or the first duration is determined based on the GNSS validity duration and a first threshold.

In a possible implementation, that the first condition is met includes:

A location change amount of the terminal device is less than or equal to a second threshold.

That the second condition is met includes:

The location change amount of the terminal device is greater than the second threshold.

The location change amount of the terminal device is determined based on the first GNSS measurement value and a second GNSS measurement value, and the second GNSS measurement value is a GNSS measurement value determined before the GNSS measurement.

Optionally, in a possible implementation, that the first condition is met includes:

A location change amount of the terminal device is less than a second threshold.

That the second condition is met includes:

The location change amount of the terminal device is greater than or equal to the second threshold.

The location change amount of the terminal device is determined based on the first GNSS measurement value and a second GNSS measurement value, and the second GNSS measurement value is a GNSS measurement value determined before the GNSS measurement.

In a possible implementation, that the first condition is met includes:

A TA value change amount is less than or equal to a third threshold.

That the second condition is met includes:

The TA value change amount is greater than the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

Optionally, in a possible implementation, that the first condition is met includes:

A TA value change amount is less than a third threshold.

That the second condition is met includes:

The TA value change amount is greater than or equal to the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

In a possible implementation, the location change amount of the terminal device is a first difference between the first GNSS measurement value and the second GNSS measurement value, or the location change amount of the terminal device is a ratio of the first difference to the second GNSS measurement value.

In a possible implementation, the TA value change amount is a second difference between the second TA value and the third TA value, or the TA value change amount is a ratio of the second difference to the third TA value.

In a possible implementation, the first threshold, the second threshold, or the third threshold is indicated by the network device, the first threshold, the second threshold, or the third threshold is predefined in a protocol, or the first threshold, the second threshold, or the third threshold is preconfigured.

In a possible implementation, a threshold is a value corresponding to the GNSS validity duration, different GNSS validity duration corresponds to different values of the threshold, and the threshold is the first threshold, the second threshold, or the third threshold.

According to a fourth aspect, this application provides a communication apparatus. The communication apparatus may be the communication apparatus, or a module, a chip, or a unit in the communication apparatus. For example, the communication apparatus may be a network device. The communication apparatus includes:

a transceiver unit, configured to send a first TA adjustment amount to a terminal device.

The transceiver unit is configured to receive a 1st uplink signal that is sent by the terminal device based on a first TA value and that is obtained through GNSS measurement.

When a first condition is met, the first TA value is determined based on a first GNSS measurement value obtained through the GNSS measurement, the first TA adjustment amount, and a first value.

When a second condition is met, the first TA value is determined based on the first GNSS measurement value, the first TA adjustment amount, and a second value. The first value is different from the second value.

In a possible implementation, that the first condition is met includes:

The terminal device performs the GNSS measurement within first duration or when the first duration ends.

That the second condition is met includes:

The terminal device performs the GNSS measurement after the first duration.

The first duration is GNSS validity duration, or the first duration is determined based on the GNSS validity duration and a first threshold.

In a possible implementation, that the first condition is met includes:

A location change amount of the terminal device is less than or equal to a second threshold.

That the second condition is met includes:

The location change amount of the terminal device is greater than the second threshold.

The location change amount of the terminal device is determined based on the first GNSS measurement value and a second GNSS measurement value, and the second GNSS measurement value is a GNSS measurement value determined before the GNSS measurement.

Optionally, in a possible implementation, that the first condition is met includes:

A location change amount of the terminal device is less than a second threshold.

That the second condition is met includes:

The location change amount of the terminal device is greater than or equal to the second threshold.

The location change amount of the terminal device is determined based on the first GNSS measurement value and a second GNSS measurement value, and the second GNSS measurement value is a GNSS measurement value determined before the GNSS measurement.

In a possible implementation, that the first condition is met includes:

A TA value change amount is less than or equal to a third threshold.

That the second condition is met includes:

The TA value change amount is greater than the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

Optionally, in a possible implementation, that the first condition is met includes:

A TA value change amount is less than a third threshold.

That the second condition is met includes:

The TA value change amount is greater than or equal to the third threshold.

The TA value change amount is determined based on a second TA value and a third TA value. The second TA value is determined based on the first GNSS measurement value. The third TA value is determined based on a second GNSS measurement value, and the second GNSS measurement value is a GNSS measurement value determined before the GNSS measurement.

In a possible implementation, the location change amount of the terminal device is a first difference between the first GNSS measurement value and the second GNSS measurement value, or the location change amount of the terminal device is a ratio of the first difference to the second GNSS measurement value.

In a possible implementation, the TA value change amount is a second difference between the second TA value and the third TA value, or the TA value change amount is a ratio of the second difference to the third TA value.

In a possible implementation, the first threshold, the second threshold, or the third threshold is indicated by the network device, the first threshold, the second threshold, or the third threshold is predefined in a protocol, or the first threshold, the second threshold, or the third threshold is preconfigured.

In a possible implementation, a threshold is a value corresponding to the GNSS validity duration, different GNSS validity duration corresponds to different values of the threshold, and the threshold is the first threshold, the second threshold, or the third threshold.

According to a fifth aspect, this application provides a communication apparatus. The communication apparatus includes a processor, and the processor is configured to execute a computer program, so that the communication apparatus performs the method according to the first aspect or the second aspect.

In a possible design, the communication apparatus may be a chip implementing the method according to the first aspect or the second aspect or a device including the chip.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. Optionally, the processor and the memory may alternatively be integrated together.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus, and the processor is configured to implement the method according to the first aspect or the second aspect by using a logic circuit or by executing code instructions.

According to a seventh aspect, this application provides a computer-readable storage medium. The storage medium stores a computer program or instructions. When the computer program or the instructions are executed by a computer, the method according to the first aspect or the second aspect is implemented.

According to an eighth aspect, this application provides a computer program product. When a computer reads and executes the computer program product, the computer is enabled to perform the method according to the first aspect or the second aspect.

According to a ninth aspect, this application provides a communication system. The communication system includes a terminal device and a network device. The terminal device is configured to implement the method according to any one of the possible implementations of the first aspect, and the network device may be configured to implement the method according to any one of the possible implementations of the second aspect.

For beneficial effects of the second aspect to the eighth aspect, refer to the beneficial effects of the first aspect. Details are not described.

## BRIEF DESCRIPTION OF DRAWINGS

FIG. 1 is a diagram of an architecture of a communication system to which an embodiment of this application is applied;
FIG. 2 is a diagram of GNSS validity duration;
FIG. 3(a), FIG. 3(b), FIG. 3(c), and FIG. 3(d) are a diagram of an NTN-based RAN architecture to which an embodiment of this application is applicable;
FIG. 4 is a diagram of an NTN system architecture;
FIG. 5 is a schematic flowchart of a communication method according to an embodiment of this application;
FIG. 6 is a diagram of first duration according to an embodiment of this application;
FIG. 7 is another diagram of first duration according to an embodiment of this application;
FIG. 8 is a diagram of a correspondence between GNSS validity duration and a first threshold according to an embodiment of this application;
FIG. 9 is a diagram of a structure of a possible communication apparatus according to an embodiment of this application; and
FIG. 10 is a diagram of a structure of a possible communication apparatus according to an embodiment of this application.

## DESCRIPTION OF EMBODIMENTS

The following further describes specific embodiments of this application in detail with reference to accompanying drawings.

In the specification, claims, and accompanying drawings of this application, terms "first", "second", and the like are intended to distinguish between different objects but are not intended to describe a specific sequence. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that specific features, structures, or characteristics described in combination with embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one piece (item)" means one or more, "a plurality of" means two or more, "at least two pieces (items)" means two or three or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression means any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

In this application, "sending information to ... (for example, a terminal)" may be understood as that a destination end of the information is the terminal, and may include directly or indirectly sending the information to the terminal. "Receiving information from ... (for example, a terminal)" or "receiving information of ... (for example, the terminal)" may be understood as that a source end of the information is the terminal, and may include directly or indirectly receiving the information from the terminal. Necessary processing, for example, a format change, may be performed on information between a source end and a destination end for information sending. However, the destination end can understand valid information from the source end. A similar expression in this application may be understood similarly. Details are not described herein again.

To better understand embodiments of this application, the following first describes a system architecture mentioned in embodiments of this application.

Technical solutions of this application may be applied to a non-terrestrial network (non-terrestrial network, NTN) or a scenario in which the NTN and a terrestrial network (terrestrial network, TN) are integrated. An NTN system may be, for example, a satellite communication system, a high altitude platform station (high altitude platform station, HAPS) communication system, or a global navigation satellite system (global navigation satellite system, GNSS). A TN system may be, for example, a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a 6th generation mobile communication (6th generation mobile communication, 6G) system, or a future mobile communication system.

A communication system provided in this application may include one or more network devices and one or more terminals.

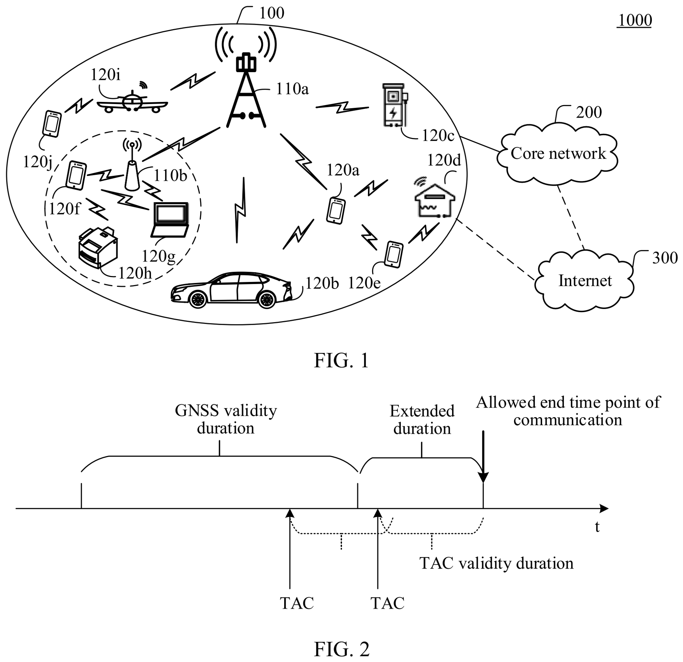

The following uses a system architecture shown in FIG. 1 as an example for description. FIG. 1 is a diagram of an architecture of a communication system to which an embodiment of this application is applied. As shown in FIG. 1, the communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the network device 110 in a wireless manner. The network device 110 may be connected to the core network 200 in a wireless or wired manner. A core network device in the core network 200 and the network device 110 in the RAN 100 may respectively be different physical devices, or may be a same physical device that integrates a logic function of the core network and a logic function of the radio access network.

It should be noted that the RAN 100 may be a cellular system related to a 3rd generation partnership project (3rd generation partnership project, 3GPP), for example, a 4G mobile communication system, a 5G mobile communication system, or an evolved system after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates the foregoing two or more systems. It should be noted that quantities of network devices and terminals in FIG. 1 are merely examples, and should not be considered as a specific limitation on this application. The following describes in detail the terminal and the network device mentioned in the system architecture.

1. Terminal

The terminal may also be referred to as a terminal device, user equipment (user equipment, UE), a mobile station (mobile station, MS), a mobile terminal device (mobile terminal, MT), a mobile terminal, mobile equipment (mobile equipment, ME), an access terminal, a subscriber unit, a subscriber station, a mobile station, a remote station, a remote terminal, a user terminal, a wireless communication device, a user agent, a user apparatus, or the like, is a device configured to provide voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed railway), a satellite terminal device, a virtual reality (virtual reality, VR) device, an augmented reality (augmented reality, AR) device, a smart point of sale (point of sale, POS) machine, customer-premises equipment (customer-premises equipment, CPE), a wireless terminal device in industrial control, a smart home device (for example, a refrigerator, a television, an air conditioner, or an electricity meter), a smart robot, a mechanical arm, a workshop device, a wireless terminal device in self-driving, a wireless terminal device in telemedicine, a wireless terminal device in a smart grid (smart grid), a wireless terminal device in transportation safety, a wireless terminal device in a smart city, a wireless terminal device in a smart home, a flight device (for example, a smart robot, a hot air balloon, an uncrewed aerial vehicle, or an airplane), or the like. The terminal device may alternatively be another device that has a function of the terminal device. For example, the terminal device may alternatively be a device that functions as the terminal device in D2D communication.
A device form of the terminal device is not limited in embodiments of this application. An apparatus configured to implement the function of the terminal device may be the terminal device, or may be an apparatus that can support the terminal device in implementing the function, for example, a chip system. The apparatus may be mounted in the terminal device or used in a manner of matching the terminal device. In embodiments of this application, the chip system may include a chip, or may include a chip and another discrete device.

2. Network device

The network device is a node in the radio access network (radio access network, RAN), and may also be referred to as an access network device or a RAN node (or device). The network device is configured to help the terminal device implement wireless access. A plurality of network devices 110 in the communication system 1000 may be nodes of a same type, or may be nodes of different types. In some scenarios, roles of the network device 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is the terminal device. The network device 110 and the terminal device 120 are sometimes referred to as communication apparatuses. For example, the network elements 110a and 110b in FIG. 1 may be understood as communication apparatuses having a function of the base station, and the network elements 120a to 120j may be understood as communication apparatuses having the function of the terminal device.
In a possible scenario, the network device may be a device having the function of the base station, for example, an evolved NodeB (evolved NodeB, eNodeB), a transmission reception point (transmission reception point, TRP), a transmission point (transmission point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device that may be deployed on a high altitude platform, or a satellite. The network device may be a macro base station (for example, 110a in FIG. 1), a micro base station or an indoor base station (for example, 110b in FIG. 1), a relay node or a donor node, or a radio controller in a CRAN scenario. The network device may alternatively be a device that functions as the base station in device to device (device to device, D2D) communication, internet of vehicles communication, uncrewed aerial vehicle communication, machine communication, or the like. Optionally, the network device may alternatively be a server, a wearable device, a vehicle, a vehicle-mounted device, or the like. For example, a network device in a vehicle to everything (vehicle to everything, V2X) technology may be a road side unit (road side unit, RSU).

All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or a part of the functions of the network device.

In another possible scenario, a plurality of network devices collaborate to assist the terminal device in implementing radio access, and different network devices separately implement a part of functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of the software module and the hardware module.

A form of the network device is not limited in embodiments of this application. An apparatus configured to implement the function of the network device may be the network device, or may be an apparatus that can support the network device in implementing the function, for example, a chip system. The apparatus may be mounted in the network device or used in a manner of matching the network device.

For ease of understanding of content of the solutions, the following further explains and describes some terms mentioned in embodiments of this application, to facilitate understanding by a person skilled in the art. This part is merely for ease of understanding, and cannot be considered as a specific limitation on this application.

1. TA

The TA is also referred to as a timing advance. For system uplink transmission, orthogonality is necessary between uplink transmission of different terminal devices in a same cell, to avoid interference between the uplink transmission of the terminal devices. To reduce a propagation delay of uplink transmission arriving at a network device, and ensure the orthogonality between the uplink transmission of the different terminal devices, a timing advance technology (also referred to as a TA technology) is designed. The TA technology may be described as follows: Terminal devices advance sending uplink transmission by a period of time (that is, the TA), to ensure that a difference between time points at which the uplink transmission of the terminal devices arrives at the network device is within a range of a cyclic prefix (cyclic prefix, CP), ensure that the time points at which the uplink transmission of the terminal devices arrives at the network device are aligned (or understood as the same), and ensure orthogonality between uplink transmission, so that the network device can correctly decode the uplink transmission. Generally, a TA value is a bidirectional transmission delay between the network device and the terminal device. In other words, the TA value reflects a signal round trip transmission delay between the terminal device and the network device.

In terrestrial communication, the TA value may be calculated by the network device (for example, a base station) based on a random access preamble (preamble) sent by the terminal device, and then notified to the terminal device by using a TAC. In an implementation, the TAC may be used to adjust the TA value in an accumulation manner. To be specific, after receiving the TAC, the terminal device accumulates the TAC to a previous TA value. Update of $N_{TA}$ is as follows:

$$N_{TA\_new} = N_{TA\_old} + (T_A - 31).\frac{16.64}{2^{\mu}}.$$

$N_{TA\_new}$ indicates a current TA adjustment amount determined based on the TAC, $N_{TA\_old}$ indicates a previous TA adjustment amount determined based on the TAC, and $T_A$ indicates a TA adjustment amount carried in the TAC. When the terminal device sends the preamble, $N_{TA}=0$, that is, initial $N_{TA}=0$. It may be understood that, this manner of adjusting the TA value by using the TAC may be referred to as a closed-loop TA adjustment mechanism. Optionally, the terminal device does not need to perform timing advance when sending the preamble.

2. GNSS measurement

A terminal device may obtain a GNSS measurement value (also referred to as GNSS information) through the GNSS measurement. The GNSS measurement value is used to calculate a bidirectional transmission delay between the terminal device and a non-terrestrial network device (for example, a satellite). Because a capability of the terminal device is weak, the GNSS measurement and communication cannot be performed simultaneously. The terminal device needs to report validity duration of a GNSS (GNSS validity duration for short) of the terminal device, and then the network device allocates a measurement gap to the terminal device to perform GNSS measurement within the GNSS validity duration, to ensure that the terminal device has valid GNSS information to implement uplink synchronization.

Optionally, the GNSS validity duration reported by the terminal device is mainly determined based on a speed of the terminal device. In an actual communication process, the network device detects a synchronization error of an uplink signal based on a signal sent by the terminal device, and corrects, by using closed-loop TA adjustment signaling (a TAC), the synchronization error caused by a GNSS error caused by location motion. Therefore, in the actual process, the network device can allow the terminal device to delay performing GNSS update. As shown in FIG. 2, the TAC also has validity duration (that is, TAC validity duration). When the TAC validity duration expires and no new TAC is received, it is considered that actual GNSS validity duration of the terminal device expires. In other words, the GNSS validity duration may be extended to some extent. A length of extended duration is determined by the TAC validity duration, the length of the extended duration may be determined by a timer or duration configured by the network device, or the length of the extended duration may be predefined in a protocol. Before the extended duration ends, the terminal device may communicate with the network device.

3. NTN

The NTN provides seamless communication coverage for a terminal device by deploying a base station or a part of functions of the base station on a non-terrestrial network device (for example, a ship, a high altitude platform, an uncrewed aerial vehicle, or a satellite), to improve reliability of a communication system. It should be noted that, for ease of understanding, in the following, only an example in which the non-terrestrial network device in the NTN is the satellite is used for description, and this should not be considered as a specific limitation on this application.

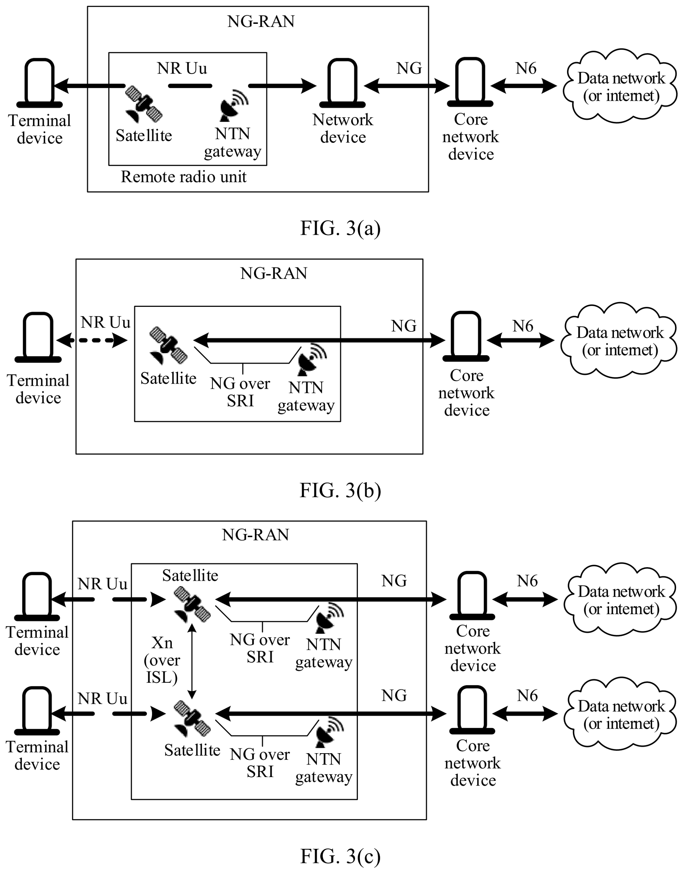

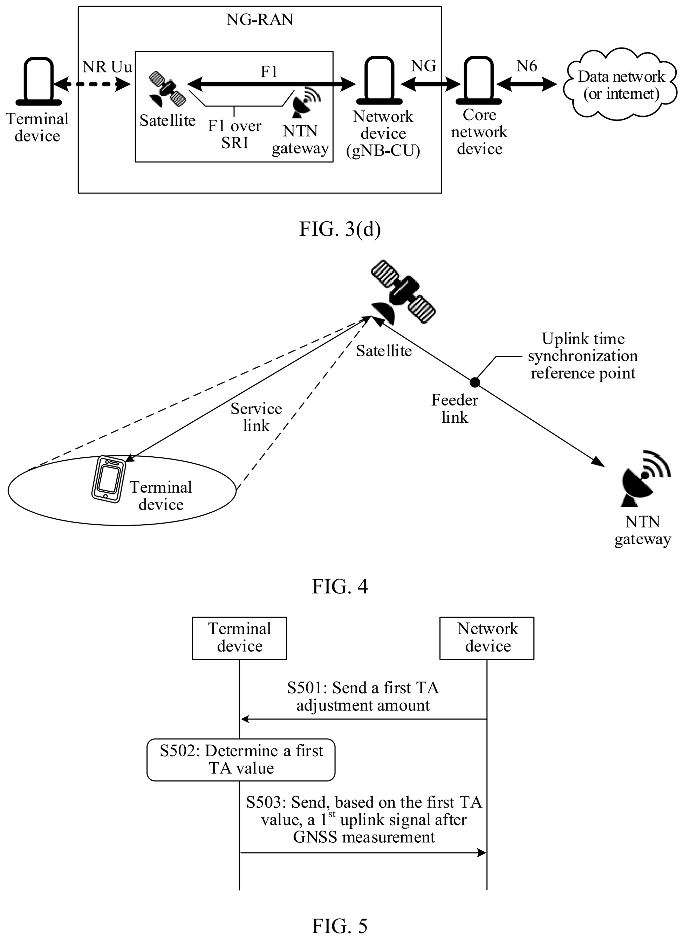

In comparison with terrestrial communication, satellite communication has such advantages as a long communication distance, a large coverage area, and a wide communication frequency band, and being capable of providing communication services for users anytime and anywhere. Therefore, application prospects of a satellite communication system are expanding. When the non-terrestrial network device is the satellite, for different NTN-based RAN architectures, the satellite may have different functions. For example, FIG. 3(a), FIG. 3(b), FIG. 3(c), and FIG. 3(d) are a diagram of an NTN-based RAN architecture to which an embodiment of this application is applicable. As shown in FIG. 3(a), FIG. 3(b), FIG. 3(c), and FIG. 3(d), the NTN-based RAN architecture may include a terminal device, a RAN (or referred to as an NG-RAN), a core network device, and a data network (or an internet).

FIG. 3(a) shows a transparent satellite (transparent satellite) architecture. The RAN may include a remote radio unit (remote radio unit, RRU) and a network device. The RRU may include a satellite and an NTN gateway (gateway). The terminal device communicates with the network device through a universal terrestrial radio access network-user (universal terrestrial radio access network-user, Uu) interface. The satellite may implement transparent payload transmission between a user and the network device. The satellite and the NTN gateway may be considered as remote radio units (remote radio units) of the network device, and implement transparent forwarding of a signal. In other words, the satellite supports functions such as radio frequency filtering, frequency conversion, and amplification, with a signal waveform remaining unchanged. Forwarding of the satellite is transparent to the terminal device. To be specific, the satellite mainly serves as a relay device at a layer 1 (L1 for short) (L1 relay), is configured to regenerate a physical layer signal (that is, perform processing of radio frequency filtering, frequency conversion, and amplification), and does not have another higher protocol layer. The network device and the core network device may communicate with each other through a next generation (next generation, NG) network interface, and exchange non-access stratum (non-access stratum, NAS) signaling of a core network and service data of the terminal device through the NG interface.

FIG. 3(b) shows a regenerative satellite without inter-satellite link (regenerative satellite without inter-satellite link) architecture. The RAN includes a network device and an NTN gateway. A satellite serves as the network device (for example, a base station), and has a processing function of the base station. The satellite communicates with the NTN gateway through a satellite radio interface (satellite radio interface, SRI). The terminal device communicates with the network device through a Uu interface. The network device and the core network device may communicate with each other through an NG interface, and exchange NAS signaling of a core network and service data of the terminal device through the NG interface.

FIG. 3(c) shows a regenerative satellite with inter-satellite link (regenerative satellite with inter-satellite link) architecture. The RAN includes a network device and an NTN gateway. A satellite serves as the network device (for example, a base station), and has a processing function of the base station. The satellite communicates with the NTN gateway through an SRI. Communication may be performed between satellites through an Xn interface over an inter-satellite link (inter-satellite link, ISL). The terminal device communicates with the network device through a Uu interface. The network device and the core network device may communicate with each other through an NG interface, and exchange NAS signaling of a core network and service data of the terminal device through the NG interface.

FIG. 3(d) shows an architecture of a regenerative satellite having a DU processing function of a base station. The satellite serves as a DU, and has the DU processing function. A CU and the DU may jointly complete a function of a network device (for example, the base station). The CU communicates with the DU through an F1 interface, and the DU communicates with an NTN gateway through an F1 interface over an SRI. The terminal device communicates with the DU through a Uu interface. The CU and the core network device may communicate with each other through an NG interface, and exchange NAS signaling of a core network and service data of the terminal device through the NG interface.

Optionally, in another architecture of a satellite having an integrated access and backhaul (integrated access and backhaul, IAB) function, the satellite serves as an IAB node. The IAB node is configured to provide a wireless backhaul (backhaul) service for a node (for example, the terminal device) wirelessly accessed to a wireless backhaul node. The wireless backhaul service is a data and/or signaling backhaul service provided through a wireless backhaul link.

It should be noted that, different from terrestrial communication, a round trip delay (round trip delay, RTD) and a round trip delay difference of the terminal device in a satellite beam/cell are far greater than those in the terrestrial communication. For example, when a diameter of a cell in a terrestrial cellular network is 350 km, a maximum round trip delay in the cell is 1.17 ms. Round trip transmission time of a high-orbit satellite is up to hundreds of milliseconds, and a round trip delay of a low-orbit satellite is also up to dozens of milliseconds. In other words, in satellite communication, because a distance between a terminal device and a satellite is very long, and the satellite moves at a very fast speed, a signal round trip delay between the terminal device and a network device is high, and consequently, signaling overheads needed for feeding back the delay by using a TAC are also large. In addition, because a speed of updating a TA cannot keep up with the speed at which the satellite moves, a timing offset of an uplink signal received by the network device is also very large, and consequently, decoding of the uplink signal fails. Based on this, in the satellite communication, another implementation, that is, an open-loop TA adjustment mechanism, is further proposed. Specifically, if uplink signals of a terminal device are aligned on an NTN gateway, or are aligned on a reference point of a feeder link between a satellite and the NTN gateway (where a link between the satellite and the NTN gateway is referred to as the feeder link), because the terminal device does not know a location of the NTN gateway or the reference point, a network device needs to additionally indicate a round trip delay (generally referred to as a common TA (common TA)) between the satellite and the NTN gateway or the reference point. The terminal device adds two TAs (to be specific, a TA on a service link (where a link between the satellite and the terminal device is usually referred to as the service link) and the common TA) together as a TA of an open-loop part.

For example, the terminal device may calculate the TA on the service link, that is, a round trip delay between the terminal device and the satellite, based on ephemeris information (that is, an orbital height of the satellite) and GNSS information (that is, a geographical location of the terminal device). Because uplink synchronization may not be performed on a satellite side, the common timing advance (common TA) needs to be introduced.

For example, refer to an NTN system architecture shown in FIG. 4. The link between the satellite and the terminal device is usually referred to as the service link, and the bidirectional transmission delay between the satellite and the terminal device is usually referred to as the TA (that is, $N_{TA,UE\text{-}specific}$ mentioned in this application) on the service link. The link between the satellite and the NTN gateway is referred to as the feeder link. The feeder link is divided into two parts by an uplink time synchronization reference point: a bidirectional transmission delay between the satellite and the uplink time synchronization reference point (that is, $N_{TA,common}$ mentioned in this application), and a bidirectional transmission delay between the uplink time synchronization reference point and the NTN gateway. The bidirectional transmission delay between the uplink time synchronization reference point and the NTN gateway is usually controlled by a base station. In the foregoing transparent architecture, the terminal device needs to calculate the TA on the feeder link. However, in the foregoing regenerative architecture, because a non-terrestrial network device carries a part of functions of the network device (for example, a function of a DU of the network device) or all functions of the network device, it may be understood as that the TA on the feeder link is 0, or the network device does not need to deliver a parameter of the common TA. In other words, when the terminal device receives no parameter of the common TA, the terminal device considers that the TA on the feeder link does not need to be calculated or the TA on the feeder link is 0.

It may be understood that, because there is an error in both the GNSS information of the terminal device and the ephemeris information of the satellite, there is also an error for this open-loop TA adjustment mechanism. Based on this, in still another implementation, a closed-loop TA adjustment mechanism and an open-loop TA adjustment mechanism may be alternatively combined. Details are as follows:

$$T_{TA} = \left(N_{TA} + N_{TA,UE-specific} + N_{TA,common} + N_{TA,offset}\right) \times T_c.$$

$N_{TA,offset}$ is a fixed value related to an operating frequency band (that is, $N_{TA,offset}$ is a specified timing offset). Generally, a value of $N_{TA,offset}$ is 39,936 or 25,600 in a low-frequency time division duplex (time division duplex, TDD) mode, a default value of $N_{TA,offset}$ is 25,600 in a low frequency (that is, a frequency band FR1), and a value of $N_{TA,offset}$ is 13,792 in a high frequency. $N_{TA,offset}$ may be obtained based on a system message of a network device, and is configured based on a timing advance offset information element (also referred to as an n-timing advance offset) in the system message, or may use a default value.

$T_c$ is a time unit, and a value is usually 1/480 kHz · 4096.

$N_{TA}$ is usually calculated by using a product of an adjustment value parameter (also referred to as a TA adjustment value or a TA adjustment amount) of $N_{TA}$ and $\frac{16.64}{2^\mu}$. The TA adjustment amount may be obtained by using a TAC, a medium access control (medium access control, MAC) control element (control element, CE), or the like. For example, update of $N_{TA}$ is as follows:

$$N_{TA\_new} = N_{TA\_old} + (\text{T}_\text{A} - 31).\frac{16.64}{2^\mu}.$$

$N_{TA\_new}$ indicates a current TA adjustment amount determined based on the TAC, $N_{TA\_old}$ indicates a previous TA adjustment amount determined based on the TAC, and $\text{T}_\text{A}$ indicates a TA adjustment amount carried in the TAC.

For example, a product of a TA absolute value received by a terminal device in a RAR process during access and $\frac{16.64}{2^\mu}$ is denoted as initial $N_{TA}$. After the terminal device sends an uplink signal to the network device by using initial $N_{TA}$, the network device sends a timing advance command to the terminal device at a moment 1, where the timing advance command includes a TA adjustment amount. Further, the terminal device may adjust initial $N_{TA}$ to $N_{TA\_new}$ based on the TA adjustment amount, where $N_{TA\_new} = \text{initial } N_{TA} + (\text{TA adjusment amount} - 31) * \frac{16.64}{2^\mu}$. After the moment 1, the terminal device calculates, by using $N_{TA\_new}$, $T_{TA}$ for sending the uplink signal. The terminal device receives, at a moment 2, a TA adjustment amount 2 delivered in the timing advance command sent by the network device. Further, the terminal device adjusts $N_{TA\_new}$ at the moment 1 to $N_{TA\_old}$, and recalculates $N_{TA\_new}$ at the moment 2, where $N_{TA\_new} = N_{TA\_old} + (\text{TA adjustment amount 2} - 31) * \frac{16.64}{2^\mu}$ $N_{TA\_new}$. After the moment 2, the terminal device uses, as $N_{TA\_old}$, $N_{TA\_new}$ newly calculated at the moment 2, to calculate $N_{TA\_new}$ at a moment 3. A subsequent adjustment process is similar. Details are not described. For ease of understanding, in the following, $N_{TA}$ determined by the terminal device is collectively referred to as the TA adjustment amount determined based on the TAC (referred to as the TA adjustment amount for short).

$N_{TA,common}$ is a bidirectional transmission delay that is between a non-terrestrial network device (for example, a satellite in this application) and an uplink time synchronization reference point and that is deduced by the terminal device, and $N_{TA,common}$ may be obtained through calculation based on the system message of the network device. In other words, a parameter of a common TA is generally broadcast by using the system message. To avoid frequently monitoring a broadcast message, the parameter of the common TA may include one or more of the common TA and high-order change rates of a TA change rate, a second-order TA change rate, a third-order TA change rate, and/or the like. The terminal device may estimate the common TA within a specific time range based on these parameters.

$N_{TA,UE\text{-}specific}$ is a bidirectional transmission delay that is between the terminal device and the non-terrestrial network device and that is calculated by the terminal device. $N_{TA,UE\text{-}specific}$ may be obtained through calculation based on the system message delivered by the network device. In a possible implementation, the terminal device may obtain ephemeris information of the non-terrestrial network device (for example, the satellite) from the system message of the network device, and calculate $N_{TA,UE\text{-}specific}$ based on a location (namely, GNSS information) of the terminal device and the ephemeris information. $N_{TA,UE\text{-}specific}$ may also be referred to as a TA on a service link.

It should be noted that, in the satellite communication, a GNSS error is continuously corrected by using the TAC. Once the terminal device updates the GNSS information through GNSS measurement, the GNSS error of the terminal device changes from an original large error to a small error. If the TAC is still used to adjust a TA value in an accumulation manner, a TA error of the terminal device jumps. Examples are as follows:

At a moment T0, the terminal device updates the GNSS information, and obtains the TA value through calculation.

At a moment T1, the terminal device sends the uplink signal to the network device by using the TA value determined at the moment T0.

At a moment T2, the terminal device receives a TAC fed back by the network device based on the uplink signal, and adjusts the TA value based on the TAC. In this case, the TAC is estimated by the network device based on the uplink signal initiated by the terminal device at the moment T1, and therefore indicates correction of an error of the GNSS information at the moment T1.

At a moment T3, the terminal device updates the GNSS information again, and obtains a latest TA value through calculation. The latest TA value compensates for the error of the GNSS information. However, the previously accumulated TAC still exists, and consequently, a TA error jumps.

Based on this, this application proposes a communication method, to improve accuracy of the TA value, and improve communication reliability.

The following describes in detail the communication method and communication apparatuses provided in this application.

FIG. 5 is a schematic flowchart of a communication method according to an embodiment of this application. As shown in FIG. 5, the communication method includes the following steps S501 to S503. The method shown in FIG. 5 may be performed by a communication apparatus or a chip in the communication apparatus. Herein, the communication apparatus may be specifically a network device or a terminal device. It should be noted that FIG. 5 is a schematic flowchart of a method embodiment of this application, and shows detailed communication steps or operations of the method. However, these steps or operations are merely examples. Other operations or variants of various operations in FIG. 5 may be further performed in embodiments of this application. In addition, the steps in FIG. 5 may be separately performed in a sequence different from that shown in FIG. 5, and possibly, not all operations in FIG. 5 need to be performed.

S501: The network device sends a first TA adjustment amount to the terminal device. Correspondingly, the terminal device receives the first TA adjustment amount from the network device.

In some feasible implementations, the network device may determine the first TA adjustment amount based on an uplink signal sent by the terminal device, and feed back the first TA adjustment amount to the terminal device. For example, the first TA adjustment amount may be carried in a TAC. It may be understood that the first TA adjustment amount herein is equivalent to $T_A$ described above in this application.

S502: The terminal device determines a first TA value.

When a first condition is met, the first TA value is determined based on a first GNSS measurement value obtained through GNSS measurement, the first TA adjustment amount, and a first value. When a second condition is met, the first TA value is determined based on a first GNSS measurement value and the first TA adjustment amount. Optionally, when a second condition is met, the first TA value is determined based on the first GNSS measurement value, the first TA adjustment amount, and a second value. For example, the second value may be 0. When the second value is 0, it is equivalent to that the first TA value is determined based on the first GNSS measurement value and the first TA adjustment amount. It may be understood that the first value is different from the second value. Generally, the first value is greater than the second value. It may be understood that the first TA value herein is equivalent to $T_{TA}$ described above in this application.

In some feasible implementations ①, that the first condition is met includes: The terminal device performs the GNSS measurement within first duration or when the first duration ends. Correspondingly, that the second condition is met includes: The terminal device performs the GNSS measurement after the first duration. Optionally, in some feasible implementations ②, that the first condition is met includes: The terminal device performs the GNSS measurement within first duration. Correspondingly, that the second condition is met includes: The terminal device performs the GNSS measurement after the first duration or when the first duration ends.

It should be noted that, that the terminal device performs GNSS measurement may be that the network device triggers the terminal device to perform GNSS measurement. For example, the network device may send indication information (or referred to as GNSS trigger signaling or a GNSS trigger command) to the terminal device, where the indication information is used to trigger the terminal device to perform GNSS measurement. Optionally, that the terminal device performs GNSS measurement may alternatively be that the terminal device autonomously performs GNSS measurement, in other words, the network device does not need to send indication information to trigger the measurement. For example, a timer (timer) may be configured by the network device for the terminal device. When the timer times out, the terminal device performs GNSS measurement. For another example, the GNSS measurement may be triggered according to a rule predefined in a protocol. For example, the rule predefined in the protocol may be that when GNSS validity duration ends, if the terminal device has not received indication information, the terminal device autonomously performs GNSS measurement. For another example, the rule predefined in the protocol may be that when the GNSS measurement of the terminal device fails, the terminal device autonomously performs GNSS measurement.

The first duration may be the GNSS validity duration, or the first duration may be determined based on the GNSS validity duration and a first threshold. For example, that the first duration is determined based on the GNSS validity duration and the first threshold may be understood as that the first duration is a sum of the GNSS validity duration and the first threshold.

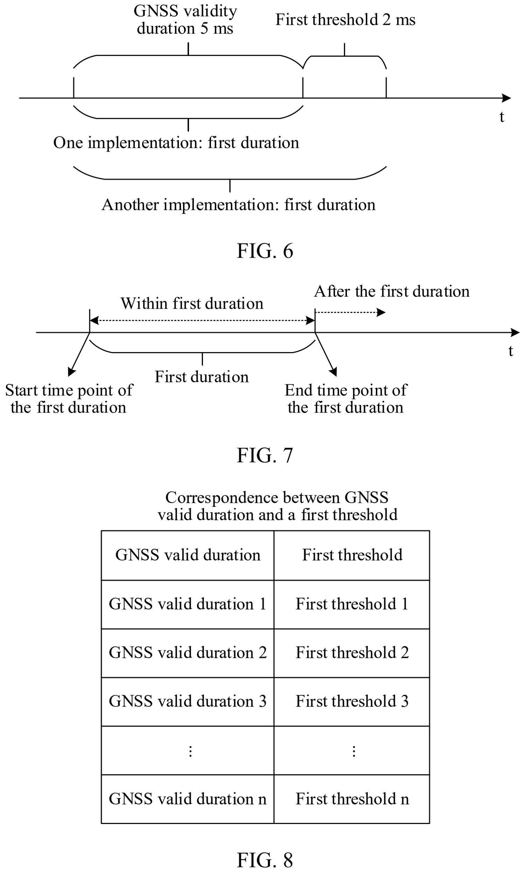

For example, FIG. 6 is a diagram of the first duration according to an embodiment of this application. As shown in FIG. 6, it is assumed that the GNSS validity duration is 5 ms, and the first threshold is 2 ms. In an implementation, if the first duration is the GNSS validity duration, the first duration is 5 ms. In another implementation, if the first duration is determined based on the GNSS validity duration and the first threshold, the first duration is 7 ms.

For ease of understanding, for "within the first duration", "when the first duration ends", and "after the first duration", refer to FIG. 7. A range from a start time point (including the start time point) of the first duration to an end time point (excluding the end time point) of first time is within the first time, "when the first time ends" is the end time point of the first time, and "after the first duration" is "after the end time point of the first time".

Optionally, in some feasible implementations ③, that the first condition is met includes: A location change amount of the terminal device is less than or equal to a second threshold. Correspondingly, that the second condition is met includes: The location change amount of the terminal device is greater than the second threshold. Optionally, in some feasible implementations ④, that the first condition is met includes: A location change amount of the terminal device is less than a second threshold. Correspondingly, that the second condition is met includes: The location change amount of the terminal device is greater than or equal to the second threshold.

The location change amount of the terminal device is determined based on the first GNSS measurement value and a second GNSS measurement value, and the second GNSS measurement value is a GNSS measurement value determined before the GNSS measurement. For example, that the location change amount of the terminal device is determined based on the first GNSS measurement value and the second GNSS measurement value may be understood as that the location change amount of the terminal device is a first difference between the first GNSS measurement value and the second GNSS measurement value, or the location change amount of the terminal device is a ratio of the first difference to the second GNSS measurement value. Optionally, the first difference may be an absolute value.

Optionally, in some feasible implementations ⑤, that the first condition is met includes: A TA value change amount is less than or equal to a third threshold. Correspondingly, that the second condition is met includes: The TA value change amount is greater than the third threshold. Optionally, in some feasible implementations ⑥, that the first condition is met includes: A TA value change amount is less than a third threshold. Correspondingly, that the second condition is met includes: The TA value change amount is greater than or equal to the third threshold.

The TA value change amount is determined based on a second TA value and a third TA value. The second TA value is determined based on the first GNSS measurement value, and the third TA value is determined based on a second GNSS measurement value. The second GNSS measurement value is a GNSS measurement value determined before the GNSS measurement. For example, that the TA value change amount is determined based on the second TA value and the third TA value may be understood as that the TA value change amount is a second difference between the second TA value and the third TA value, or the TA value change amount is a ratio of the second difference to the third TA value. Optionally, the second difference may be an absolute value.

It should be noted that the second TA value or the third TA value herein is equivalent to $N_{TA,UE\text{-}specific}$ described above in this application.

It should be noted that the first threshold, the second threshold, or the third threshold may be indicated by the network device, the first threshold, the second threshold, or the third threshold is predefined in a protocol, or the first threshold, the second threshold, or the third threshold is preconfigured. It may be understood that "indicated by the network device" may be understood as "configured by the network device for the terminal device". The "predefined" may be understood as that information is defined in a standard/protocol, does not need to be configured by another device (and cannot be changed by the network device or another terminal device), and is pre-recorded/prewritten in hardware and/or software of the terminal device. The "preconfigured" may be understood as that information is pre-recorded/pre-written in hardware and/or software of the terminal device, is determined by a factory device vendor, and may be changed by using software or hardware.

It should be noted that a threshold may be a fixed value, or the threshold may be a value corresponding to the GNSS validity duration, that is, different GNSS validity duration corresponds to different values of the threshold. An example in which the threshold is the first threshold is used. In an implementation, the first threshold may be a fixed value, for example, 5 ms. Alternatively, the first threshold may be a value corresponding to the GNSS validity duration, that is, there is a correspondence between the GNSS validity duration and the first threshold. As shown in FIG. 8, when the GNSS validity duration is GNSS validity duration 1, the first threshold is a first threshold 1; when the GNSS validity duration is GNSS validity duration 2, the first threshold is a first threshold 2; when the GNSS validity duration is GNSS validity duration 3, the first threshold is a first threshold 3; ...; or when the GNSS validity duration is GNSS validity duration n, the first threshold is a first threshold n. Values of the GNSS validity duration 1 to the GNSS validity duration n are different, and values of the first threshold 1 to the first threshold n are different. It may be understood that the second threshold or the third threshold is similar. Details are not described herein again.

The following explains the first value and the second value.

In a possible implementation 1, for the first value, the first value may be a value determined based on all TACs accumulated between sending a current random access preamble and current GNSS measurement. In other words, the first value may be determined based on all TA adjustment amounts between sending the current random access preamble and receiving the first TA adjustment amount (or referred to as all TA adjustment amounts determined based on the TAC before the first TA adjustment amount). Alternatively, the first value may be a sum of all TA adjustment amounts between sending the current random access preamble and receiving the first TA adjustment amount. Optionally, "all the TA adjustment amounts before the GNSS measurement, or all the TA adjustment amounts received before the first TA adjustment amount" may also be understood as TA adjustment amounts received between clearing a previously accumulated TA adjustment amount by the terminal device (that is, initial $N_{TA}$ =0) and performing the GNSS measurement. For example, initial $N_{TA}$=0 may be caused by uplink out-of-synchronization, may be caused by sending the random access preamble by the terminal device, or may be caused by another reason.

For ease of description, "the TA adjustment amounts received between clearing the previously accumulated TA adjustment amount by the terminal device and performing the GNSS measurement" may be briefly described as "all previous TA adjustment amounts determined based on the TAC" below. In addition, for ease of description, in the following, "R" may indicate the sum of all the previous TA adjustment amounts determined based on the TAC. In other words, R is equivalent to $N_{TA\_old}$ described above.

For example, it is assumed that the first TA adjustment amount is a TA adjustment amount received at a moment 3, where all TA adjustment amounts determined based on the TAC before the moment 3 are respectively TA adjustment amounts of 1 ms, 0.5 ms, and 0.5 ms corresponding to a moment 0, a moment 1, and a moment 2. In this case, the first value may be a sum of the TA adjustment amounts corresponding to the moment 0, the moment 1, and the moment 2. Therefore, the first value is 2 ms.

In another possible implementation 2, for the second value, the second value may be 0. In other words, the first TA value is determined based on the first GNSS measurement value and the first TA adjustment amount.

In another possible implementation 3, the first value or the second value may alternatively be a value determined by accumulating a part of previous TACs, that is, determined based on a part of previous TA adjustment amounts. In other words, the first value or the second value is a part of R. For example, a specific proportion of the first value or the second value in R may be predefined in a protocol, or may be configured or preconfigured by the network device. This is not limited herein.

For example, it is assumed that the first TA adjustment amount is a TA adjustment amount received at a moment 3, where all TA adjustment amounts determined based on the TAC before the moment 3 are respectively TA adjustment amounts of 1 ms, 0.5 ms, and 0.5 ms corresponding to a moment 0, a moment 1, and a moment 2. In this case, the first value or the second value may be a part of a sum of the TA adjustment amounts corresponding to the moment 0, the moment 1, and the moment 2, for example, 50 percent of the sum of the TA adjustment amounts corresponding to the moment 0, the moment 1, and the moment 2. Therefore, the first value or the second value is 1 ms.

In another possible implementation 4, when the first condition and the second condition are met as the conditions in the foregoing implementations ① or ②, the first value or the second value may be related to a length of extended duration. For example, the first value=$R \times Y_1$%, where R indicates a sum of all previous TA adjustment amounts determined based on a TAC, and $Y_1$ is related to the length of the extended duration. For another example, the first value is $Z_1$, where $Z_1$ is related to the length of the extended duration. For example, the second value=$R \times Y_2$%, where R indicates the sum of all the previous TA adjustment amounts determined based on the TAC, and $Y_2$ is related to the length of the extended duration. For another example, the second value is $Z_2$, where $Z_2$ is related to the length of the extended duration. For an understanding of the extended duration herein, refer to the related descriptions in FIG. 2. Details are not described herein again.

In another possible implementation 5, when the first condition and the second condition are met as the conditions in the foregoing implementations ① or ②, the first value or the second value may be related to a TA adjustment amount determined based on a TAC within extended duration (in the following, W may indicate the TA adjustment amount determined based on the TAC within the extended duration). For example, the first value=R-W, where R indicates a sum of all previous TA adjustment amounts determined based on a TAC, and W indicates the TA adjustment amount determined based on the TAC within the extended duration. For another example, the first value=$W \times Y_3$%, where $Y_3$ is related to W.

In another possible implementation 6, when the first condition and the second condition are met as the conditions in the foregoing implementations ① or ②, the first value or the second value may be related to the GNSS validity duration and a TA adjustment amount determined based on a TAC within extended duration (in the following, M may indicate the GNSS validity duration and the TA adjustment amount determined based on the TAC within the extended duration). For example, the first value=R-M, where R indicates a sum of all previous TA adjustment amounts determined based on the TAC, and M indicates the GNSS validity duration and the TA adjustment amount determined based on the TAC within the extended duration. For another example, the first value=$M \times Y_4$%, where $Y_4$ is related to M.

In another possible implementation 7, when the first condition and the second condition are met as the conditions in the foregoing implementations ③ or ④, a value of the first value or the second value may be related to the location change amount of the terminal device. The first value is used as an example. If the location change amount of the terminal device belongs to a first location change range, the first value is N1. If the location change amount of the terminal device belongs to a second location change range, the first value is N2. If the location change amount of the terminal device belongs to a third location change range, the first value is N3. The second value is used as another example. If the location change amount of the terminal device belongs to a first location change range, the second value is E1. If the location change amount of the terminal device belongs to a second location change range, the second value is E2. If the location change amount of the terminal device belongs to a third location change range, the second value is E3.

In another possible implementation 8, when the first condition and the second condition are met as the conditions in the foregoing implementations ⑤ or ⑥, a value of the first value or the second value may be related to the TA value change amount. The first value is used as an example. If the TA value change amount belongs to a first location change range, the first value is P1. If the TA value change amount belongs to a second location change range, the first value is P2. If the TA value change amount belongs to a third location change range, the first value is P3. The second value is used as another example. If the TA value change amount belongs to a first location change range, the second value is Q1. If the TA value change amount belongs to a second location change range, the second value is Q2. If the TA value change amount belongs to a third location change range, the second value is Q3.

In another possible implementation 9, the first value or the second value may alternatively not be related to another parameter, that is, the first value or the second value is a value configured by the network device, or the first value or the second value may be a value predefined in a protocol or preconfigured.

It should be noted that, which implementation in the foregoing implementation 1 to implementation 9 is used to determine the first value or the second value may be predefined in a protocol, may be preconfigured, or may be configured by the network device. This is not limited herein.

S503: The terminal device sends, based on the first TA value, a 1st uplink signal obtained through the GNSS measurement. Correspondingly, the network device receives the 1st uplink signal that is sent by the terminal device based on the first TA value and that is obtained through the GNSS measurement.

In some feasible implementations, after the terminal device determines the first TA value, the terminal device may send, according to/based on/by using the first TA value, the 1st uplink signal obtained through the GNSS measurement.

Optionally, the terminal device may further send the GNSS validity duration to the network device.

In this application, the first value and the second value are determined based on different conditions, to correct a GNSS error, so that an error jump can be avoided, and accuracy of the first TA value can be improved, thereby improving communication reliability.

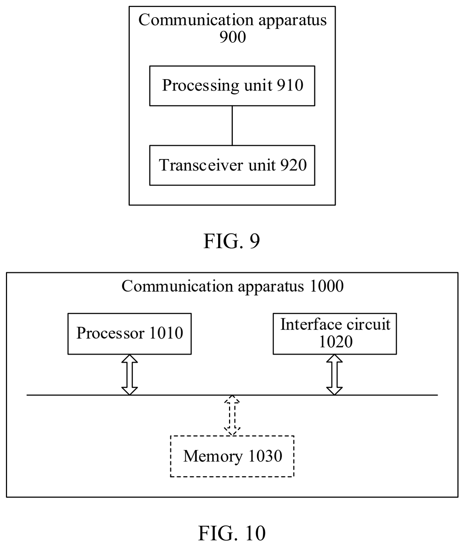

The following describes in detail communication apparatuses according to this application with reference to FIG. 9 and FIG. 10.

It may be understood that, to implement functions in the foregoing embodiments, the communication apparatus includes corresponding hardware structures and/or software modules for performing the functions. A person skilled in the art should be easily aware that, in combination with the units and the method steps in the examples described in embodiments disclosed in this application, this application can be implemented in a form of hardware or a combination of hardware and computer software. Whether a function is performed by using hardware or hardware driven by computer software depends on a particular application scenario and a design constraint condition of the technical solutions.

FIG. 9 and FIG. 10 each are a diagram of a structure of a possible communication apparatus according to an embodiment of this application. These communication apparatuses may be configured to implement functions of the terminal device or the network device in the foregoing method embodiments, and therefore can also implement the beneficial effects in the foregoing method embodiments. In embodiments of this application, the communication apparatus may be one of the terminal devices 120a to 120j shown in FIG. 1, may be the network device 110a or 110b shown in FIG. 1, or may be a module (for example, a chip) used in the terminal device or the network device.

As shown in FIG. 9, the communication apparatus 900 includes a processing unit 910 and a transceiver unit 920. The communication apparatus 900 is configured to implement functions of the terminal device or the network device in the method embodiment shown in FIG. 5.

When the communication apparatus 900 is configured to implement the functions of the terminal device in the method embodiment shown in FIG. 5,

the transceiver unit 920 is configured to receive a first timing advance TA adjustment amount from a network device;
the processing unit 910 is configured to determine a first TA value; and
the transceiver unit 920 is configured to send, based on the first TA value, a 1st uplink signal after global navigation satellite system GNSS measurement, where when a first condition is met, the first TA value is determined based on a first GNSS measurement value obtained through the GNSS measurement, the first TA adjustment amount, and a first value; and when a second condition is met, the first TA value is determined based on the first GNSS measurement value, the first TA adjustment amount, and a second value; and the first value is different from the second value.

When the communication apparatus 900 is configured to implement the functions of the network device in the method embodiment shown in FIG. 5,

the transceiver unit 920 is configured to send a first timing advance TA adjustment amount to a terminal device; and
the transceiver unit 920 is configured to receive a 1st uplink signal that is after global navigation satellite system GNSS measurement and that is sent by the terminal device based on a first TA value, where when a first condition is met, the first TA value is determined based on a first GNSS measurement value obtained through the GNSS measurement, the first TA adjustment amount, and a first value; and when a second condition is met, the first TA value is determined based on the first GNSS measurement value, the first TA adjustment amount, and a second value; and the first value is different from the second value.

For more detailed descriptions of the processing unit 910 and the transceiver unit 920, refer to the related descriptions in the method embodiment shown in FIG. 5.

As shown in FIG. 10, the communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, store input data required by the processor 1010 to run the instructions, or store data generated after the processor 1010 runs the instructions.

When the communication apparatus 1000 is configured to implement the method shown in FIG. 5, the processor 1010 is configured to implement a function of the processing unit 910, and the interface circuit 1020 is configured to implement a function of the transceiver unit 920.

When the communication apparatus is the chip used in the terminal device, the chip in the terminal device implements the functions of the terminal device in the foregoing method embodiments. The chip in the terminal device receives, through another module (for example, a radio frequency module or an antenna) in the terminal device, information sent by a network device to the terminal device; or the chip in the terminal device sends information to another module (for example, a radio frequency module or an antenna) in the terminal device, where the information is sent by the terminal device to a network device.

When the communication apparatus is the module used in the network device, the module in the network device implements the functions of the network device in the foregoing method embodiments. The module in the network device receives information from another module (for example, a radio frequency module or an antenna) in the network device, where the information is sent by a terminal device to the network device; or the module in the network device sends information to another module (for example, a radio frequency module or an antenna) in the network device, where the information is sent by the network device to a terminal device. The module in the network device herein may be a baseband chip of the network device, may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. In an example, the storage medium is coupled to the processor, so that the processor can read information from the storage medium and write information into the storage medium. The storage medium may alternatively be a component of the processor. The processor and the storage medium may be disposed in an ASIC. In addition, the ASIC may be located in the network device or the terminal device. Alternatively, the processor and the storage medium may exist in the network device or the terminal device as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: the volatile storage medium and the non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers mentioned in embodiments of this application are merely for differentiation for ease of description, and are not for limiting the scope of embodiments of this application. Sequence numbers of the foregoing processes do not mean an execution sequence, and the execution sequence of the processes should be determined based on functions and internal logic of the processes.

## Claims

1. A communication method, comprising:

   receiving a first timing advance TA adjustment amount from a network device;
   determining a first TA value; and
   sending, based on the first TA value, a 1st uplink signal after global navigation satellite system GNSS measurement, wherein
   when a first condition is met, the first TA value is determined based on a first GNSS measurement value obtained through the GNSS measurement, the first TA adjustment amount, and a first value; and
   when a second condition is met, the first TA value is determined based on the first GNSS measurement value, the first TA adjustment amount, and a second value; and the first value is different from the second value.

2. The method according to claim 1, wherein
   that the first condition is met comprises:

   a terminal device performs the GNSS measurement within first duration or when the first duration ends; and
   that the second condition is met comprises:

   the terminal device performs the GNSS measurement after the first duration, wherein
   the first duration is GNSS validity duration, or the first duration is determined based on the GNSS validity duration and a first threshold.

3. The method according to claim 1, wherein
   that the first condition is met comprises:

   a location change amount of a terminal device is less than or equal to a second threshold; and
   that the second condition is met comprises:

   the location change amount of the terminal device is greater than the second threshold, wherein
   the location change amount of the terminal device is determined based on the first GNSS measurement value and a second GNSS measurement value, and the second GNSS measurement value is a GNSS measurement value determined before the GNSS measurement.

4. The method according to claim 1, wherein
   that the first condition is met comprises:

   a TA value change amount is less than or equal to a third threshold; and
   that the second condition is met comprises:

   the TA value change amount is greater than the third threshold, wherein
   the TA value change amount is determined based on a second TA value and a third TA value; the second TA value is determined based on the first GNSS measurement value; and the third TA value is determined based on a second GNSS measurement value, and the second GNSS measurement value is a GNSS measurement value determined before the GNSS measurement.

5. The method according to claim 3, wherein the location change amount of the terminal device is a first difference between the first GNSS measurement value and the second GNSS measurement value, or the location change amount of the terminal device is a ratio of the first difference to the second GNSS measurement value.

6. The method according to claim 4, wherein the TA value change amount is a second difference between the second TA value and the third TA value, or the TA value change amount is a ratio of the second difference to the third TA value.

7. The method according to any one of claims 2 to 6, wherein the first threshold, the second threshold, or the third threshold is indicated by the network device, the first threshold, the second threshold, or the third threshold is predefined in a protocol, or the first threshold, the second threshold, or the third threshold is preconfigured.

8. The method according to any one of claims 2 to 7, wherein a threshold is a value corresponding to the GNSS validity duration, different GNSS validity duration corresponds to different values of the threshold, and the threshold is the first threshold, the second threshold, or the third threshold.

9. A communication method, comprising:

sending a first timing advance TA adjustment amount to a terminal device; and
receiving a $1^{st}$ uplink signal that is after global navigation satellite system GNSS measurement and that is sent by the terminal device based on a first TA value, wherein
when a first condition is met, the first TA value is determined based on a first GNSS measurement value obtained through the GNSS measurement, the first TA adjustment amount, and a first value; and
when a second condition is met, the first TA value is determined based on the first GNSS measurement value, the first TA adjustment amount, and a second value; and the first value is different from the second value.

10. The method according to claim 9, wherein
that the first condition is met comprises:

the terminal device performs the GNSS measurement within first duration or when the first duration ends; and
that the second condition is met comprises:

the terminal device performs the GNSS measurement after the first duration, wherein
the first duration is GNSS validity duration, or the first duration is determined based on the GNSS validity duration and a first threshold.

11. The method according to claim 9, wherein
that the first condition is met comprises:

a location change amount of the terminal device is less than or equal to a second threshold; and
that the second condition is met comprises:

the location change amount of the terminal device is greater than the second threshold, wherein
the location change amount of the terminal device is determined based on the first GNSS measurement value and a second GNSS measurement value, and the second GNSS measurement value is a GNSS measurement value determined before the GNSS measurement.

12. The method according to claim 9, wherein
that the first condition is met comprises:

a TA value change amount is less than or equal to a third threshold; and
that the second condition is met comprises:

the TA value change amount is greater than the third threshold, wherein
the TA value change amount is determined based on a second TA value and a third TA value; the second TA value is determined based on the first GNSS measurement value; and the third TA value is determined based on a second GNSS measurement value, and the second GNSS measurement value is a GNSS measurement value determined before the GNSS measurement.

13. A communication apparatus, wherein the communication apparatus is a terminal device, and comprises:

a transceiver unit, configured to receive a first timing advance TA adjustment amount from a network device; and
a processing unit, configured to determine a first TA value, wherein

the transceiver unit is configured to send, based on the first TA value, a 1st uplink signal after global navigation satellite system GNSS measurement, wherein

when a first condition is met, the first TA value is determined based on a first GNSS measurement value obtained through the GNSS measurement, the first TA adjustment amount, and a first value; and

when a second condition is met, the first TA value is determined based on the first GNSS measurement value, the first TA adjustment amount, and a second value; and the first value is different from the second value.

14. The apparatus according to claim 13, wherein
that the first condition is met comprises:

the terminal device performs the GNSS measurement within first duration or when the first duration ends; and
that the second condition is met comprises:

the terminal device performs the GNSS measurement after the first duration, wherein
the first duration is GNSS validity duration, or the first duration is determined based on the GNSS validity duration and a first threshold.

15. The apparatus according to claim 13, wherein
that the first condition is met comprises:

a location change amount of the terminal device is less than or equal to a second threshold; and
that the second condition is met comprises:

the location change amount of the terminal device is greater than the second threshold, wherein
the location change amount of the terminal device is determined based on the first GNSS measurement value and a second GNSS measurement value, and the second GNSS measurement value is a GNSS measurement value determined before the GNSS measurement.

16. The apparatus according to claim 13, wherein
that the first condition is met comprises:

a TA value change amount is less than or equal to a third threshold; and
that the second condition is met comprises:

the TA value change amount is greater than the third threshold, wherein
the TA value change amount is determined based on a second TA value and a third TA value; the second TA value is determined based on the first GNSS measurement value; and the third TA value is determined based on a second GNSS measurement value, and the second GNSS measurement value is a GNSS measurement value determined before the GNSS measurement.

17. The apparatus according to claim 15, wherein the location change amount of the terminal device is a first difference between the first GNSS measurement value and the second GNSS measurement value, or the location change amount of the terminal device is a ratio of the first difference to the second GNSS measurement value.

18. The apparatus according to claim 16, wherein the TA value change amount is a second difference between the second TA value and the third TA value, or the TA value change amount is a ratio of the second difference to the third TA value.

19. The apparatus according to any one of claims 14 to 18, wherein the first threshold, the second threshold, or the third threshold is indicated by the network device, the first threshold, the second threshold, or the third threshold is predefined in a protocol, or the first threshold, the second threshold, or the third threshold is preconfigured.

20. The apparatus according to any one of claims 14 to 19, wherein a threshold is a value corresponding to the GNSS validity duration, different GNSS validity duration corresponds to different values of the threshold, and the threshold is the first threshold, the second threshold, or the third threshold.

21. A communication apparatus, wherein the communication apparatus is a network device, and comprises:

a transceiver unit, configured to send a first timing advance TA adjustment amount to a terminal device, wherein the transceiver unit is configured to receive a 1st uplink signal that is after global navigation satellite system GNSS measurement and that is sent by the terminal device based on a first TA value, wherein

when a first condition is met, the first TA value is determined based on a first GNSS measurement value obtained through the GNSS measurement, the first TA adjustment amount, and a first value; and

when a second condition is met, the first TA value is determined based on the first GNSS measurement value, the first TA adjustment amount, and a second value; and the first value is different from the second value.

22. The apparatus according to claim 21, wherein
that the first condition is met comprises:

the terminal device performs the GNSS measurement within first duration or when the first duration ends; and
that the second condition is met comprises:

the terminal device performs the GNSS measurement after the first duration, wherein
the first duration is GNSS validity duration, or the first duration is determined based on the GNSS validity duration and a first threshold.

23. The apparatus according to claim 21, wherein
that the first condition is met comprises:

a location change amount of the terminal device is less than or equal to a second threshold; and
that the second condition is met comprises:

the location change amount of the terminal device is greater than the second threshold, wherein
the location change amount of the terminal device is determined based on the first GNSS measurement value and a second GNSS measurement value, and the second GNSS measurement value is a GNSS measurement value determined before the GNSS measurement.

24. The apparatus according to claim 21, wherein
that the first condition is met comprises:

a TA value change amount is less than or equal to a third threshold; and
that the second condition is met comprises:

the TA value change amount is greater than the third threshold, wherein
the TA value change amount is determined based on a second TA value and a third TA value; the second TA value is determined based on the first GNSS measurement value; and the third TA value is determined based on a second GNSS measurement value, and the second GNSS measurement value is a GNSS measurement value determined before the GNSS measurement.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 8 or the method according to any one of claims 9 to 12 by using a logic circuit or by executing code instructions.

26. A computer-readable storage medium, wherein the storage medium stores a computer program or instructions, and when the computer program or the instructions are executed by a communication apparatus, the method according to any one of claims 1 to 8 is implemented, or the method according to any one of claims 9 to 12 is implemented.

27. A computer program product, comprising computer program code, wherein when the computer program code is run on a computer, the method according to any one of claims 1 to 8 is implemented, or the method according to any one of claims 9 to 12 is implemented.

28. A communication system, comprising a terminal device and a network device, wherein the terminal device is configured to implement the method according to any one of claims 1 to 8, and the network device is configured to implement the method according to any one of claims 9 to 12.

FIG. 1

FIG. 2

FIG. 3(a)

FIG. 3(b)

FIG. 3(c)

NG-RAN

Terminal device

NR Uu

Satellite

F1

F1 over SRI

NTN gateway

Network device (gNB-CU)

NG

Core network device

N6

Data network (or internet)

FIG. 3(d)

Satellite

Uplink time synchronization reference point

Service link

Feeder link

Terminal device

NTN gateway

FIG. 4

| Terminal device | Network device |
|---|---|

S501: Send a first TA adjustment amount

S502: Determine a first TA value

S503: Send, based on the first TA value, a $1^{st}$ uplink signal after GNSS measurement

FIG. 5

GNSS validity
duration 5 ms          First threshold 2 ms

One implementation: first duration

Another implementation: first duration

## FIG. 6

Within first duration          After the first duration

First duration

Start time point of          End time point of
the first duration          the first duration

## FIG. 7

Correspondence between GNSS
valid duration and a first threshold

| GNSS valid duration | First threshold |
|---|---|
| GNSS valid duration 1 | First threshold 1 |
| GNSS valid duration 2 | First threshold 2 |
| GNSS valid duration 3 | First threshold 3 |
| ⋮ | ⋮ |
| GNSS valid duration n | First threshold n |

## FIG. 8

Communication apparatus
900

Processing unit 910

Transceiver unit 920

FIG. 9

Communication apparatus 1000

Processor 1010

Interface circuit
1020

Memory 1030

FIG. 10

## INTERNATIONAL SEARCH REPORT

| International application No. |
| --- |
| **PCT/CN2024/087612** |

| A. | CLASSIFICATION OF SUBJECT MATTER |
| --- | --- |

H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 补偿, 测量, 调整, 定时, 提前, 累积, 累加, 卫星, GNSS, TA, timing, advanc +, compensation, measur+, adjust+, accumulation, satellite

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022207281 A1 (SONY GROUP CORP.) 06 October 2022 (2022-10-06) description, paragraphs 67-150 | 1-28 |
| A | CN 115314985 A (OROPE FRANCE SARL) 08 November 2022 (2022-11-08) entire document | 1-28 |
| A | WO 2022243910 A1 (TELEFONAKTIEBOLAGET LM ERICSSON (PUBL)) 24 November 2022 (2022-11-24) entire document | 1-28 |
| A | WO 2023014271 A1 (TELEFONAKTIEBOLAGET LM ERICSSON (PUBL)) 09 February 2023 (2023-02-09) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 July 2024** | **10 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

International application No.

**PCT/CN2024/087612**

| Patent document cited in search report | | | Publication date (day/month/year) | Patent family member(s) | | | Publication date (day/month/year) |
|---|---|---|---|---|---|---|---|
| WO | 2022207281 | A1 | 06 October 2022 | US | 2024179654 | A1 | 30 May 2024 |
| | | | | EP | 4298834 | A1 | 03 January 2024 |
| | | | | CN | 117063547 | A | 14 November 2023 |
| CN | 115314985 | A | 08 November 2022 | WO | 2022195315 | A1 | 22 September 2022 |
| | | | | EP | 4309304 | A1 | 24 January 2024 |
| | | | | US | 2024008012 | A1 | 04 January 2024 |
| WO | 2022243910 | A1 | 24 November 2022 | EP | 4342103 | A1 | 27 March 2024 |
| | | | | CN | 117321932 | A | 29 December 2023 |
| WO | 2023014271 | A1 | 09 February 2023 | CN | 117796062 | A | 29 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310573566